**Europäisches Patentamt**

**European Patent Office**

**Office européen des brevets**

(19)

(11) Veröffentlichungsnummer: **0 209 043 B1**

(12) **EUROPÄISCHE PATENTSCHRIFT**

(45) Veröffentlichungstag der Patentschrift:
29.03.89

(21) Anmeldenummer: **86109274.0**

(22) Anmeldetag: **07.07.86**

(51) Int. Cl.⁴: **F01K 23/06**, F02C 3/28

(54) **Kombiniertes Gas- und Dampfturbinenkraftwerk.**

(30) Priorität: **19.07.85  DE 3525929**

(43) Veröffentlichungstag der Anmeldung:
**21.01.87 Patentblatt 87/4**

(45) Bekanntmachung des Hinweises auf die Patenterteilung:
**29.03.89 Patentblatt 89/13**

(84) Benannte Vertragsstaaten:
**AT DE**

(56) Entgegenhaltungen:
**EP-A- 0 129 167**
**DE-A- 2 429 993**
**DE-A- 2 924 245**
**DE-A- 3 319 711**
**US-A- 4 132 065**
**US-A- 4 288 979**

**PATENTS ABSTRACTS OF JAPAN, Band 8,**
**Nr. 61 (M-284)[1498], 23. März 1984**

(73) Patentinhaber: **Siemens Aktiengesellschaft Berlin und München, Wittelsbacherplatz 2, D-8000 München 2(DE)**

(72) Erfinder: **Goebel, Konrad, Dipl.-Ing., Stettiner Strasse 5, D-8520 Erlangen(DE)**
Erfinder: **Tränkenschuh, Hans-Chris, Waldstrasse 6, D-8550 Forchheim-Kersbach(DE)**

## Beschreibung

Die Erfindung bezieht sich auf ein kombiniertes Gas- und Dampfturbinenkraftwerk mit einem dem Gasturbinenteil vorgeschalteten Kohlevergaser, mit einer dem Kohlevergaser rohgasseitig nachgeschalteten Wärmetauscheranlage, mit einem Hochdruckdampferzeuger, einem Rohgas-Reingas-Wärmetauscher und einem Niederdruckdampferzeuger, mit einer der Wärmetauscheranlage nachgeschalteten Gasreinigungsanlage, mit einer von der Gasreinigungsanlage zur Brennkammer der Gasturbine führenden Reingasleitung, mit einer vom Abgasstrom der Gasturbine durchströmten Abhitzedampferzeugeranlage mit einem Economiser, einem Hochdruckdampferzeuger und mit einem an der Abhitzedampferzeugeranlage angeschlossenen Dampfturbinenkraftwerksteil.

Ein solches kombiniertes Gas- und Dampfturbinenkraftwerk ist durch die DE-OS 3 319 711 bekannt. Bei diesem bekannten, kombinierten Gas- und Dampfturbinenkraftwerk wird das den Kohlevergaser verlassende heiße Rohgas vor der Einleitung in die Gasreinigungsanlage in einer Wärmetauscheranlage auf für die Gasreinigungsanlage verträgliche Temperaturen, etwa 100°C, abgekühlt. Die dabei freiwerdende Wärme wird im Hochdruckdampferzeuger · der Wärmetauscheranlage zur Erzeugung von Hochdruckdampf, im Rohgas-Reingas-Wärmetauscher zur Wiederaufheizung des der Brennkammer der Gasturbine zuströmenden Reingases und in dem Niederdruck-Wärmetauscher zur Erzeugung von Niederdruckdampf verwendet. Der so erzeugte Hochdruckdampf und Niederdruckdampf wird bei diesem bekannten kombinierten Gas- und Dampfturbinenkraftwerk einer Hochdruckdampfturbine und Niederdruckdampfturbine zugeleitet. Darüber hinaus wird bei diesem bekannten Kraftwerk weiterer Hochdruckdampf in dem vom Abgasstrom der Gasturbine durchströmten Abhitzedampferzeuger erzeugt. Es ist ein besonderer Vorzug eines solchen Gas- und Dampfturbinenkraftwerks, daß seine Leistung in weiten Grenzen variiert werden kann. Selbst bei vollständigem Abschalten der Gasturbine und dem Aufhören der Dampferzeugung in dem der Gasturbine nachgeschalteten Abhitzedampferzeuger kann die Dampfturbine mit Hilfe des in der dem Kohlevergaser nachgeschalteten Wärmetauscheranlage erzeugten Dampfes – wenn auch mit verringerter Leistung – weiterbetrieben werden. Somit kann selbst in diesem extremen Fall noch der Eigenbedarf an elektrischer Leistung bei diesem kombinierten Gasund Dampfturbinenkraftwerk über den von der Dampfturbine angetriebenen Generator gedeckt werden.

Durch die EP-A 129 167 ist ein kombiniertes Gasund Dampfturbinenkraftwerk entsprechend dem Oberbegriff von Anspruch 1 bekannt. Bei diesem vorbekannten Gas- und Dampfturbinenkraftwerk wird das gesamte Speisewasser in einem allen Dampferzeugern gemeinsamen Economiser, der sich in der Abhitzedampferzeugeranlage befindet, vorgewärmt. Erst hinter diesem gemeinsamen Economiser zweigen die verschiedenen zu den Nieder- und Hochdruckverdampfern führenden Stränge ab. Es ist eine Eigenart dieser Anlage, daß bei einem Defekt im gemeinsamen Economiser, oder in der diesem vorgeschalteten Speisewasserpumpe eine Vollabschaltung der Gesamtanlage zwingend wird.

Der Erfindung liegt die Aufgabe zugrunde, die fühlbare Wärme sowohl des Rohgases hinter dem Kohlevergaser als auch der Abgase der Gasturbine in diesem kombinierten Gas- und Dampfturbinenkraftwerk bestmöglich auszunutzen und zugleich die Betriebszuverlässigkeit soweit als möglich zu erhöhen.

Diese Aufgabe wird durch die Merkmale des Anspruchs 1 gelöst. Vorteilhafte Weiterbildungen sind in den Ansprüchen 2 bis 8 beschrieben.

Dadurch, daß die Speisewasserleitung noch vor dem Economiser in mehrere unabhängig voneinander geführte Stränge aufgeteilt ist, wobei parallel zu dem zur Abhitzedampferzeugeranlage führenden ersten Strang der Speisewasserleitung ein weiterer Strang der Speisewasserleitung über eine gasseitig anderen Heizflächen der Abhitzedampferzeugeranlage nachgeschaltete Heizfläche zu dem Hochdruckdampferzeuger der dem Kohlevergaser nachgeschalteten Wärmetauscheranlage geführt ist, ist es möglich, zusätzliches Speisewasser in gasseitig dem Hochdruckdampferzeuger der Abhitzedampferzeugeranlage nachgeschalteten Heizflächen vorzuwärmen und vorgewärmt dem Hochdruckdampferzeuger der dem Kohlevergaser nachgeschalteten Wärmetauscheranlage zuzuführen. Hierdurch wird die Menge und Qualität des in den vorgeschalteten Heizflächen des Hochdruckdampferzeugers der Abhitzedampferzeugeranlage erzeugten Dampfes nicht beeinträchtigt. Aber die Menge des in dem Hockdruckdampferzeuger der dem Kohlevergaser nachgeschalteten Wärmetauscheranlage erzeugbaren Hochdruckdampfes läßt sich so bei unveränderter Qualität bedeutend steigern. Zugleich wird durch diese Lösung mit voneinander unabhängigen Strängen eine größtmögliche Flexibilität und Betriebszuverlässigkeit der Gesamtanlage erreicht.

Die fühlbare Wärme des in dem Hochdruckdampferzeuger der dem Kohlevergaser nachgeschalteten Wärmetauscheranlage einströmenden Rohgases läßt sich noch besser ausnutzen, wenn deren Hochdruckdampferzeuger in zweckmäßiger Ausgestaltung der Erfindung in Strömungsrichtung des Rohgases hintereinander mindestens eine Überhitzerheizfläche und eine erste und zweite Verdampferheizfläche enthält. Durch diesen Aufbau des Hochdruckdampferzeugers wird die Temperaturdifferenz der einzelnen Heizflächen des Hochdruckdampferzeugers besser an die jeweilige örtliche Rohgastemperatur angepaßt.

Auch die fühlbare Wärme des in den Abhitzedampferzeuger einströmenden Abgases der Gasturbine läßt sich besser ausnutzen, wenn in zweckmäßiger Weiterbildung der Erfindung der erste, zum Hochdruckdampferzeuger der Abhitzedampferzeugeranlage führende Strang der Speisewasserleitung über gasseitig den Heizflächen dieses Hochdruckdampferzeugers nachgeschaltete Heizflächen geführt wird.

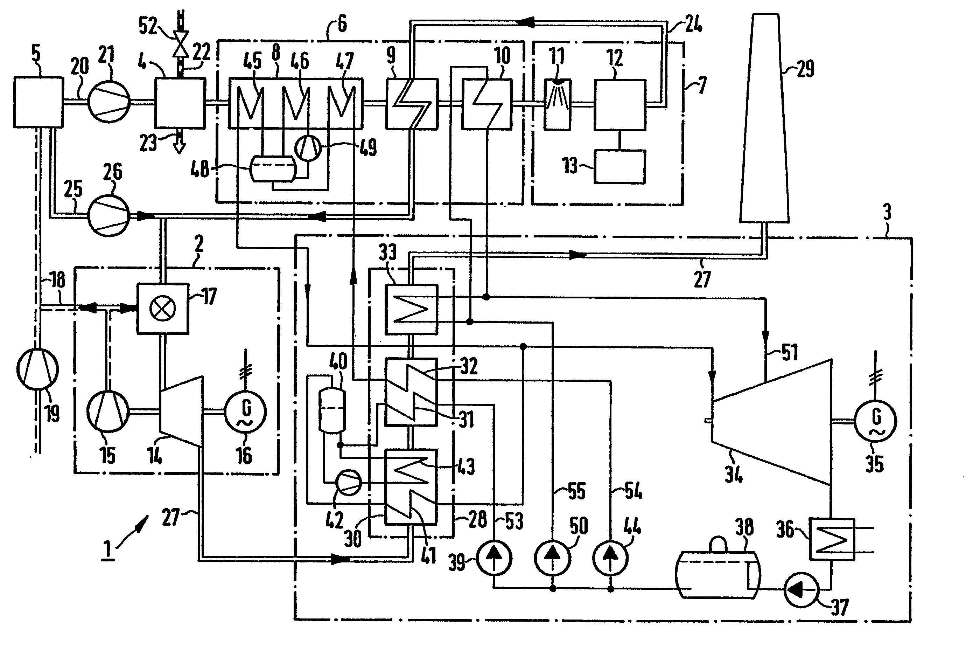

Weitere Einzelheiten der Erfindung werden anhand eines in der Figur dargestellten Ausführungsbeispiels erläutert. Es zeigt:

Die Figur eine schematische Anordnung der einzelnen Wärmetauscherheizflächen und ihre gegenseitige Verknüpfung im erfindungsgemäßen kombinierten Gas- und Dampfturbinenkraftwerk.

In der Figur sind die einzelnen Bauelemente des kombinierten Gas- und Dampfturbinenkraftwerks 1 in ihrer gegenseitigen Verknüpfung dargestellt. So besteht das kombinierte Gas- und Dampfturbinenkraftwerk im wesentlichen aus einem Gasturbinenkraftwerksteil 2 und einem Dampfturbinenkraftwerksteil 3, einen dem Gasturbinenkraftwerksteil 2 vorgeschalteten Kohlevergaser 4 mit einer dem Kohlevergaser vorgeschalteten Luftzerlegungsanlage 5, einer dem Kohlevergaser 4 rohgasseitig nachgeschalteten Wärmetauscheranlage 6 und einer der Wärmetauscheranlage 6 nachgeschalteten Gasreinigungsanlage 7. Die Wärmetauscheranlage 6 umfaßt einen Hochdruckdampferzeuger 8, einen Rohgas-Reingas-Wärmetauscher 9 und einen Niederdruckdampferzeuger 10. Die an die Wärmetauscheranlage angeschlossene Gasreinigungsanlage 7 umfaßt im Ausführungsbeispiel einen Rohgaswäscher 11, eine Schwefel-Wasserstoff-Absorptionsanlage 12 und eine Schwefel-Gewinnungsanlage 13. Der Gasturbinenkraftwerksteil 2 beinhaltet eine Gasturbine 14, sowie je einen von der Gasturbine angetriebenen Luftverdichter 15 und Generator 16. An den Luftverdichter 15 ist eine sowohl zur Brennkammer 17 der Gasturbine als auch zur Luftzerlegungsanlage 5 führende Frischluftleitung 18 angeschlossen. An der zur Luftzerlegungsanlage 5 führenden Frischluftleitung 18 ist außerdem ein weiterer, bedarfsweise zuschaltbarer, separat antreibbarer Luftverdichter 19 angeschlossen. Die die Luftzerlegungsanlage 5 verlassende Sauerstoffleitung 20 ist über einen Sauerstoffverdichter 21 an den Kohlevergaser 4 angeschlossen. Dessen Kohleeintragsleitung 22 und die Ascheaustragsleitung 23 sind angedeutet. Die die Gasreinigungsanlage 7 verlassende Reingasleitung 24 ist über den Rohgas-Reingas-Wärmetauscher 9 der Wärmetauscheranlage 6 geführt und an die Brennkammer 17 der Gasturbine 14 angeschlossen. Die die Luftzerlegungsanlage 5 verlassende Stickstoffleitung 25 ist über einen Stickstoffverdichter 26 ebenfalls an die Brennkammer der Gasturbine 14 angeschlossen.

Die Abgasleitung 27 der Gasturbine 14 führt durch eine Abhitzedampferzeugeranlage 28 und mündet anschließend in einen Kamin 29. Die Abhitzedampferzeugeranlage 28 umfaßt in Strömungsrichtung des Abgases nacheinander einen Hochdruckdampferzeuger 30, zwei Speisewasserheizflächen 31, 32 und einen Niederdruckdampferzeuger 33.

Die Dampfturbine 34 des Dampfturbinenkraftwerksteils 3 ist mit einem Generator 35 gekuppelt und abdampfseitig an einen Kondensator 36 angeschlossen. Der Kondensator 36 wird über eine Kondensatpumpe 37 in einen Speisewasserbehälter 38 entleert. Ein erster, an den Speisewasserbehälter 38 angeschlossener mit einer Speisewasserpumpe 39 versehener Strang 53 der Speisewasserleitung ist über die dem Hochdruckdampferzeuger 30 der Abhitzedampferzeugeranlage 28 nachgeschaltete Speisewasserheizfläche 31 an ein Wasserdampftrenngefäß angeschlossen. Dieses Wasserdampftrenngefäß 40 ist dampfseitig an eine Überhitzerheizfläche 41 des Hochdruckdampferzeugers 30 der Abhitzedampferzeugeranlage 28 angeschlossen. Diese Überhitzerheizfläche ist mit der Hochdruckseite der Dampfturbine 34 verbunden. Das Wasserdampftrenngefäß 40 ist wasserseitig über eine separate Förderpumpe 42 mit einer der Überhitzerheizflächen 41 gasseitig nachgeordneten Hochdruckdampferzeugerheizfläche 43 verbunden. Letztere ist ausgangsseitig an das Wasserdampftrenngefäß 40 angeschlossen.

Ein zweiter, an den Speisewasserbehälter 38 angeschlossener und mit einer Speisewasserpumpe 44 versehener Strang 54 der Speisewasserleitung ist an die Speisewasserheizfläche 32 der Abhitzedampferzeugeranlage 28, die der vorgenannten Speisewasserheizfläche 31 gasseitig nachgeschaltet ist, angeschlossen. Diese letztgenannte Speisewasserheizfläche 32 ist an den Hochdruckdampferzeuger 8 der dem Kohlevergaser 4 nachgeschalteten Wärmetauscheranlage 6 angeschlossen. Dieser Hochdruckdampferzeuger 8 ist im Ausführungsbeispiel der Figur mit drei Heizflächen ausgestattet, von denen die dem Kohlevergaser 4 zugewandte Heizfläche als Überhitzerheizfläche 45 und die beiden anderen Heizflächen als erste und zweite Verdampferheizflächen 46, 47 ausgebildet sind. Die vom Kohlevergaser 4 abgewandte zweite Verdampferheizfläche 47 ist eingangsseitig an die letztgenannte Speisewasserheizfläche 32 der Abhitzedampferzeugeranlage 28 und ausgangsseitig an ein Wasserdampftrenngefäß 48 angeschlossen. Dieses Wasserdampftrenngefäß ist wasserseitig über eine Förderpumpe 49 an die erste Verdampferheizfläche 46 des Hochdruckdampferzeugers 8, der ausgangsseitig wieder in das Wasser-Dampf-Trenngefäß 48 mündet, angeschlossen. Dampfseitig ist das Wasserdampftrenngefäß 40 an die Überhitzerheizfläche 45 des Hochdruckdampferzeugers 8 angeschlossen. Diese Überhitzerheizfläche ist ausgangsseitig ebenfalls mit der Hochdruckseite der Dampfturbine 34 verbunden.

Ein dritter, mit einer Speisewasserpumpe 50 versehener Strang 55 der Speisewasserleitung ist an den allen anderen Heizflächen der Abhitzedampferzeugeranlage 28 nachgeschalteten Niederdruckdampferzeuger 33 und den hierzu parallel geschalteten, allen übrigen Heizflächen der Wärmetauscheranlage 6 nachgeschalteten Niederdruckdampferzeuger 10 angeschlossen. Ausgangsseitig sind diese beiden Niederdruckdampferzeuger an eine Mitteleinspeisung 51 der Dampfturbine 34 angeschlossen.

Beim Betrieb dieses kombinierten Gas- und Dampfturbinenkraftwerks 1 wird durch den auf der Welle der Gasturbine 14 sitzenden Luftverdichter 15 Luft sowohl in die Brennkammer 17 als auch in die Luftleitung 18 der Luftzerlegungsanlage 5 gefördert. Über den in der Sauerstoffleitung 20 der Luftzerlegungsanlage 5 angeschlossenen Sauerstoffverdichter 21 gelangt Sauerstoff in den aufgeladenen Kohlevergaser 4. Über die mittels einer gasdichten Schleuse 52 verschließbare Kohleeintragsleitung 22 wird feingemahlene Kohle in den Kohlevergaser 4 gefördert. Das im Kohlevergaser erzeugte Rohgas strömt in der Wärmetauscheranlage 6 zunächst durch die Heizflächen des Hochdruckdampferzeugers 8 und hier wiederum zuerst durch die Überhitzerheizfläche 45 und dann durch die ersten und zweiten Verdampferheizflächen 46 und 47. Danach strömt es in den Rohgas-Reingaswärmetauscher 9 und in den Niederdruckdampferzeuger 10. Das auf etwa 100°C abgekühlte Rohgas wird in der Gasreinigungsanlage 7 über einen Rohgaswäscher 11 einer Schwefel-Wasserstoffabsorptionsanlage 12 zugeführt. Die ausgewaschenen Schwefelverbindungen werden in der der Schwefelwasserstoffabsorptionsanlage nachgeschalteten Schwefelgewinnungsanlage 13 zu reinem Schwefel reduziert. Das die Schwefel-Wasserstoffabsorptionsanlage 12 verlassende Reingas wird im Rohgas-Reingas-Wärmetauscher 9 wieder aufgewärmt und zusammen mit dem aus der Luftzerlegungsanlage 5 zuströmenden Stickstoff der Brennkammer 17 der Gasturbine 14 zugeleitet. Dabei ist in der Stickstoffleitung 25 zur Überbrückung der Druckdifferenz ein weiterer Stickstoffverdichter 26 eingebaut.

Das die Gasturbine 14 verlassende Abgas strömt über die Abgasleitung 27 in die Abhitzedampferzeugeranlage 28 und dort zunächst über die Überhitzerheizflächen 41 zu der Verdampferheizfläche 43 des Hochdruckdampferzeugers 30. Sodann strömt es durch die Speisewasserheizflächen 31, 32 und den Niederdruckdampferzeuger 33. Das nunmehr auf ca. 120° abgekühlte Abgas wird in den Kamin 29 entlassen.

Durch diese Anordnung der einzelnen Heizflächen in der Abhitzedampferzeugeranlage 28 und in der Wärmetauscheranlage 6 und der offenbarten Reihenfolge der Durchströmung dieser Heizfläche vom Rohgas des Kohlevergasers 4 bzw. vom Abgas der Gasturbine 14 einerseits als auch andererseits vom Speisewasser wird eine Vergleichmäßigung der Temperaturdifferenzen in den einzelnen Heizflächen und somit eine bessere Ausnutzung der Abwärme des Rohgases des Kohlevergasers und des Abgases der Gasturbine erreicht. Dabei wird vor allem das gegenüber dem Reingasstrom wesentlich größere Gasvolumen des die Gasturbine 14 verlassenden Abgases mit dazu benutzt, nicht nur das Speisewasser für den Hochdruckdampferzeuger 30 der Abhitzedampferzeugeranlage 28, sondern auch das Speisewasser des Hochdruckdampferzeugers 8 der dem Kohlevergaser 4 nachgeschalteten Wärmetauscheranlage 6 mit aufzuwärmen. Dadurch kann auf dem höheren Temperaturniveau des dem Kohlevergaser 4 entströmenden Rohgases bedeutend mehr Hochdruckdampf erzeugt werden als bei anderen bekannten Schaltungen.

Bezugszeichenliste

Gas- und Damfpturbinenkraftwerk 1
Gasturbinenkraftwerksteil 2
Dampfturbinenkraftwerksteil 3
Kohlevergaser 4
Luftzerlegungsanlage 5
Wärmetauscheranlage 6
Gasreinigungsanlage 7
Hochdruckdampferzeuger 8
Rohgas-Reingas-Wärmetauscher 9
Niederdruckdampferzeuger 10
Rohgaswäscher 11
Schwefelwasserstoffabsorptionsanlage 12
Schwefelgewinnungsanlage 13
Gasturbine 14
Luftverdichter 15
Generator 16
Brennkammer 17
Luftleitung 18
Luftverdichter 19
Sauerstoffleitung 20
Sauerstoffverdichter 21
Kohleeintragsleitung 22
Ascheaustragsleitung 23
Reingasleitung 24
Stickstoffleitung 25
Stickstoffverdichter 26
Abgasleitung 27
Abhitzedampferzeugeranlage 28
Kamin 29
Hochdruckdampferzeuger 30
Hochdruck-Speisewasserheizfläche 31, 32
Neiderdruckdampferzeuger 33
Dampfturbine 34
Generator 35
Kondensator 36
Kondensatpumpe 37
Speisewasserbehälter 38
erste Speisewasserpumpe 39
Wasserdampftrenngefäß 40
Überhitzerheizfläche 41
Förderpumpe 42
Hochdruckdampferzeugerheizfläche 43
zweite Speisewasserpumpe 44
Überhitzerheizfläche 45
erste Verdampferheizfläche 46
zweite Verdampferheizfläche 47
Wasserdampftrenngefäß 48
Förderpumpe 49
Speisewasserpumpe 50
Mitteleinspeisung 51
Schleuse 52
Strang 53, 54, 55

Patentansprüche

1. Kombiniertes Gas- und Dampfturbinenkraftwerk mit einem dem Gasturbinenteil vorgeschalteten Kohlevergaser, mit einer dem Kohlevergaser rohgasseitig nachgeschalteten Wärmetauscheranlage mit einem Hochdruckdampferzeuger, einem Rohgas-Reingas-Wärmetauscher und einem Niederdruckdampferzeuger, mit einer der Wärmetauscheranlage nachgeschalteten Gasreinigungsanlage, mit einer von der Gasreinigungsanlage zur Brennkammer der Gasturbine führenden Reingasleitung, mit einer vom Abgasstrom der Gasturbine durchströmten Abhitzedampferzeugeranlage mit einem Economiser, einem Hochdruckdampferzeuger und mit einem an der Abhitzedampferzeugeranlage angeschlossenen Dampfturbinenkraftwerksteil, wobei die Speisewasserleitung noch vor dem Economiser in mehrere unabhängig voneinander geführte Stränge aufgeteilt ist, dadurch gekennzeichnet, daß parallel zu dem zur Abhitzedampferzeugeranlage (28) führenden ersten Strang (53) der Speisewasserleitung ein weiterer Strang (54) der Speisewasserleitung über eine gasseitig anderen Heizflächen (41, 43) der Abhitzedampferzeugeranlage nachgeschaltete Heizfläche (32) zu dem Hochdruckdampferzeuger (8) der dem Kohlevergaser (4) nachgeschalteten Wärmetauscheranlage (6) geführt ist.

2. Kombiniertes Gas- und Dampfturbinenkraftwerk nach Anspruch 1, dadurch gekennzeichnet, daß der Hochdruckdampferzeuger (8) der dem Kohlevergaser (4) nachgeschalteten Wärmetauscheranlage (6) in Strömungsrichtung des Rohgases hintereinander mindestens eine Überhitzerheizfläche (45) und eine erste und zweite Verdampferheizfläche (46, 47) beinhaltet.

3. Kombiniertes Gas- und Dampfturbinenkraftwerk nach Anspruch 1, dadurch gekennzeichnet, daß der erste zum Hochdruckdampferzeuger (30) der Abhitzedampferzeugeranlage (28) führende Strang (53) der Speisewasserleitung über eine gasseitig den Heizflächen (41, 43) dieses Hochdruckdampferzeugers nachgeschaltete Heizfläche (31) geführt ist.

4. Kombiniertes Gas- und Dampfkraftwerk nach Anspruch 3, dadurch gekennzeichnet, daß der Hochdruckdampferzeuger (30) der Abhitzedampferzeugeranlage (28) und der Hochdruckdampferzeuger (8) der dem Kohlevergaser (4) nachgeschalteten Wärmetauscheranlage (6) speisewasserseitig parallel geschaltet sind.

5. Kombiniertes Gas- und Dampfturbinenkraftwerk nach Anspruch 3, dadurch gekennzeichnet, daß der in der Abhitzedampferzeugeranlage (28) befindliche Hochdruckdampferzeuger (30) mindestens eine Verdampferheizfläche (43) und eine dieser gasseitig vorgeschaltete Überhitzerheizfläche (41) beinhaltet.

6. Kombiniertes Gas- und Dampfturbinenkraftwerk nach Anspruch 2, dadurch gekennzeichnet, daß die zweite Verdampferheizfläche (47) des Hochdruckdampferzeugers (8) der dem Kohlevergaser (4) nachgeschalteten Wärmetauscheranlage unmittelbar an den weiteren von der Speisewasserheizfläche (32) der Abhitzedampferzeugeranlage (28) kommenden Strang (54) der Speisewasserleitung angeschlossen ist und ausgangsseitig über ein Wasser-Dampf-Trenngefäß (48) mit der ersten Verdampferheizfläche (46) und der Überhitzerheizfläche (45) des Hochdruckdampferzeugers (8) der dem Kohlevergaser nachgeschalteten Wärmetauscheranlage verbunden ist.

7. Kombiniertes Gas- und Dampfturbinenkraftwerk nach Anspruch 6, dadurch gekennzeichnet, daß der Dampfraum des Wasser-Dampf-Trenngefäßes (48) an der Überhitzerheizfläche (45) angeschlossen ist.

8. Kombiniertes Gas- und Dampfturbinenkraftwerk nach Anspruch 6, dadurch gekennzeichnet, daß der mit Wasser gefüllte untere Raum des Wasser-Dampf-Trenngefäßes (48) über eine Umwälzpumpe (49) mit der ersten Verdampferheizfläche (46) verbunden ist, welche ausgangsseitig wiederum an das Wasser-Dampf-Trenngefäß angeschlossen ist.

## Claims

1. Combined gas and steam turbine power plant, with a coal gasification apparatus arranged upstream of the gas turbine part, with a heat exchanger installation arranged downstream, considering the flow of raw gas, of the coal gasification apparatus and having a high-pressure steam generator, a raw gas/purified gas heat exchanger and a low-pressure steam generator, with a gas purification installation arranged downstream of the heat exchanger installation, with a purified gas conduit leading from the gas purification installation to the combustion chamber of the gas turbine, with a waste-heat steam generator installation having the exhaust gas of the gas turbine flowing therethrough and having an economiser and a high-pressure steam generator, and with a steam turbine power plant part which is connected to the waste-heat steam generator installation, the feed water piping being also divided upstream of the economiser into a plurality of runs extending independently of one another, characterised in that parallel to the first feed water piping run (53) leading to the waste-heat steam generator installation (28) a further feed water piping run (54) is taken, by way of a heating surface (32) arranged downstream, considering the flow of gas, of other heating surfaces (41, 43) of the waste-heat steam generator installation, to the high-pressure steam generator (8) of the heat exchanger installation (6) which is arranged downstream of the coal gasification apparatus (4).

2. Combined gas and steam turbine power plant according to claim 1, characterised in that the high-pressure steam generator (8) of the heat exchanger installation (6) situated downstream of the coal gasification apparatus (4) comprises in succession to one another in the raw gas flow direction at least one superheater heating surface (45) and a first and a second evaporator heating surface (46, 47).

3. Combined gas and steam turbine power plant according to claim 1, characterised in that the first feed water piging run (53), leading to the high-pressure steam generator (30) of the waste-heat steam generator installation (28), extends by way of a heating surface (31) which is arranged downstream, considering the flow of gas, of the heating surfaces (41, 43) of this high-pressure steam generator.

4. Combined gas and steam power plant according to claim 3, characterised in that the high-pressure steam generator (30) of the waste-heat steam generator installation (28), and the high-pressure steam generator (8) of the heat exchanger installation (6) arranged downstream of the coal gasification apparatus (4), are arranged in parallel, considering the feed water flow.

5. Combined gas and steam turbine power plant according to claim 3, characterised in that the high-pressure steam generator (30) situated in the waste-heat steam generator installation (28) comprises at least one evaporator heating surface (43) and a superheater heating surface (41) which is upstream of the latter, considering gas flow.

6. Combined gas and steam turbine power plant according to claim 2, characterised in that the second evaporator heating surface (47) of the high-pressure steam generator (8) of the heat exchanger installation arranged downstream of the coal gasification apparatus (4) is connected directly to the further feed water piping run (54) coming from the feed water heating surface (32) of the waste-heat steam generator installation (28), and at the outlet side is connected via a water-steam separator vessel (48) to the first evaporator heating surface (46) and to the super-heater heating surface (45) of the high-pressure steam generator (8) of the heat exchanger installation arranged downstream of the coal gasification apparatus.

7. Combined gas and steam turbine power plant according to claim 6, characterised in that the steam space of the water-steam separator vessel (48) is connected to the superheater heating surface (45).

8. Combined gas and steam turbine power plant according to claim 6, characterised in that the lower space of the water-steam separator vessel (48), which space is filled with water, is connected via a circulation pump (49) to the first evaporator heating surface (46), which itself is connected at the outlet side to the water-steam separator vessel (48).

**Revendications**

1. Centrale thermique combinée à turbine à gaz et à vapeur, comprenant un gazéificateur de charbon, une installation à échangeur de chaleur qui est montée en aval du côté du gaz brut du gazéificateur de charbon et qui comprend un générateur de vapeur haute pression, un échangeur de chaleur gaz brut-gaz épuré et un générateur de vapeur basse pression, une installation d'épuration du gaz montée en aval de l'installation à échangeur de chaleur, un conduit pour le gaz épuré menant de l'installation d'épuration du gaz à la chambre de combustion de la turbine à gaz, une installation de génération de vapeur par récupération de chaleur, parcourue par le courant gazeux sortant de la turbine à gaz et comprenant un économiseur, et un génératuer de vapeur haute pression, et une partie de centrale thermique à turbine à vapeur raccordée à l'installation à génératuer de vapeur par récupération de chaleur, le conduit d'eau d'alimentation étant subdivisé en amont de l'économiseur en plusieurs tronçons indépendants les uns des autres, caractérisée en ce que parallèlement au premier tronçon (53), menant à l'installation à générateur de vapeur par récupération de chaleur (28), du conduit d'eau d'alimentation, un autre tronçon (54) du conduit d'eau d'alimentation, un autre tronçon (54) du conduit d'eau d'alimentation passe par une surface de chauffe (32) disposée en aval du côté du gaz d'une autre surface de chauffe (41, 43) de l'installation à générateur de vapeur par récupération de chaleur, pour aller au générateur de vapeur haute pression (8) de l'installation à échanteur de chaleur (6) montée en aval du gazéificateur de charbon (4).

2. Centrale thermique combinée à turbine à gaz et à turbine à vapeur suivant la revendication 1, caractérisée en ce que le générateur de vapeur haute pression (8) de l'installation à échangeur de chaleur (6) monté en aval du gazéificateur de charbon (4), comporte successivement, dans le sens d'écoulement du gaz brut, au moins une surface de chauffe de surchauffage (45) et une première et une seconde surfaces de chauffe d'évaporateur (46, 47).

3. Centrale thermique combinée à turbine à gaz et à turbine à vapeur suivant la revendication 1, caractérisée en ce que le premier tronçon (53) du conduit d'eau d'alimentation, qui mène au générateur de vapeur haute pression (30) de l'installation à générateur de vapeur par récupération de chaleur (28), passe par une surface de chauffe (31) montée en aval, du côté du gaz des surfaces de chauffe (41, 43) de ce générateur de vapeur haute pression.

4. Centrale thermique combinée à turbine à gaz et à turbine à vapeur suivant la revendication 3, caractérisée en ce que le générateur de vapeur haute pression (30) de l'installation à génératuer de vapeur par récupération de chaleur (28) et le générateur de vapeur haute pression (8) de l'installation à échangeur de chaleur (6) montée en aval du gazéificateur de charbon (4), sont montés en parallèle du côté de l'eau d'alimentation.

5. Centrale themique combinée à turbine à gaz et à turbine à vapeur suivant la revendication 3, caractérisée en ce que le générateur de vapeur haute pression (30) se trouvant dans l'installation à générateur de vapeur par récupération de chaleur (28), comporte au moins une surface de chauffe d'évaporateur (43) et une surface de chauffe de surchauffage (41) montée en aval de celle-ci du côté du gaz.

6. Centrale thermique combinée à turbine à gaz et à turbine à vapeur suivant la revendication 2, caractérisée en ce que la seconde surface de chauffe d'évaporateur (47) du générateur de vapeur haut pression (8) de l'installation à échangeur de chaleur montée en aval du gazéificateur de charbon (4), est raccordée directement à l'autre tronçon (5) du conduit d'eau d'alimentation venant de la surface de chauffe (32) d'eau d'alimentation de l'installation à générateur de vapeur par récupération de chaleur (28) et est reliée du côté de la sortie, par l'intermédiaire d'une cuve de séparation eau-vapeur (48), à la première surface de chauffe d'évaporateur (46) et à la surface de chauffage de surchauffage (45) du générateur de vapeur haute pression (8) de l'installation à échangeur de chaleur montée en aval du gazéificateur de charbon.

7. Centrale thermique combinée à turbine à gaz et à turbine à vapeur suivant la revendication 6, caractérisée en ce que la chambre destinée à la vapeur de la cuve de séparation eau-vapeur (48) est raccordée à la surface de chauffe de surchauffage (45).

8. Centrale thermique combinée à turbine à gaz et à turbine à vapeur suivant la revendication 6, caractérisée en ce que la chambre inférieure, emplie d'eau, de la cuve de séparation eau-vapeur (48) est reliée par une pompe de circulation (49) à la première surface de chauffe d'évaporateur (46) qui, du côté de la sortie, est reliée à nouveau à la cuve de séparation eau-vapeur.